# EUROPÄISCHE PATENTSCHRIFT

(11) **EP 1 420 918 B1**
(45) Veröffentlichungstag und Bekanntmachung des Hinweises auf die Patenterteilung: **25.11.2009**
(21) Anmeldenummer: 02758147.9
(22) Anmeldetag: 16.08.2002
(51) Int. Cl.: B23Q 11/10

(54) **VERFAHREN UND WERKZEUG ZUR BEARBEITUNG VON WERKSTÜCKEN MIT KÜHLUNG**
METHOD AND TOOL FOR THE MACHINING OF WORKPIECES WITH COOLING
PROCEDE ET OUTIL D'USINAGE DE PIECES AVEC REFROIDISSEMENT

(30) Priorität: 27.08.2001 DE 10140718
(43) Veröffentlichungstag der Anmeldung: 26.05.2004
(73) Patentinhaber: Multimatic International GmbH, 49176 Hilter (DE); Ford-Werke GmbH, 50735 Köln (DE)
(72) Erfinder: JÄGER, Walter, 49176 Hilter (DE); STOLL, Alexander, Plymouth, MI 48170 (US)
(74) Vertreter: Stornebel, Kai
(86) Internationale Anmeldenummer: PCT/DE2002/003021
(87) Internationale Veröffentlichungsnummer: WO 2003/026843

(56) Entgegenhaltungen:
- DE-A- 4 326 517
- DE-B- 1 037 808
- FR-A- 2 724 337
- FR-A- 2 804 492
- GB-A- 781 310
- GB-A- 784 504
- US-A- 3 077 802
- US-A- 4 829 859
- US-A- 4 919 232
- PATENT ABSTRACTS OF JAPAN vol. 2000, no. 11, 3. Januar 2001 (2001-01-03) & JP 2000 210837 A (YOKOGAWA KAZUHIKO;YAMADA TORATOSHI), 2. August 2000 (2000-08-02)

## Beschreibung

Die Erfindung betrifft ein Verfahren zur spanenden oder verformenden Bearbeitung von metallischen oder keramischen Werkstücken und der Verwendung eines vorzugsweise eintauchenden Werkzeuges, wobei während des Bearbeitungsvorganges ein zumindest überwiegend aus Kohlendioxid (CO₂) bestehendes Kühlmittel der Bearbeitungsstelle zugeführt wird.

Die Erfindung betrifft ferner ein Werkzeug zur Durchführung des vorstehend beschriebenen Verfahrens.

Das eingangs beschriebene Verfahren lässt sich der DE 43 26 517 C2 entnehmen. Offenbart ist hier ein Verfahren zur spanenden Bearbeitung von metallischen Werkstücken und auch keramischer Oberflächen, wobei während des Bearbeitungsvorganges durch Zufuhr eines Kühlmittels zur Bearbeitungsstelle gekühlt wird, und wobei zur Kühlung ein zumindest überwiegend aus Kohlendioxid bestehender Kühlmittelstrahl enthaltend kaltes Gas und Schneepartikel der Bearbeitungsstelle zugeführt wird. Dabei wird der Kühlmittelstrahl aus gasförmigem, unter geeignetem Überdruck stehendem CO₂ derart gewonnen, dass das CO₂-Gas über eine Schlitzdüse oder eine sonstige schlitzartige Öffnung zunächst in ein um diesen Expansionsschlitz herum ausgebildetes, weitgehend gegen die Umgebung abgeschlossenes Expansionsvolumen hinein expandiert wird und ausgehend von diesem Expansionsvolumen und dessen Austrittsöffnung der Kühlstrahl gebildet und auf den zu kühlenden Bereich gerichtet wird. Dabei liegt das Ausgangsdruckniveau für das CO₂ vor der Entspannung bei wenigstens 50 bar.

Aus der DE-B 15 509 lb/49a ist ein Verfahren zur spanenden Bearbeitung von metallischen Werkstücken bekannt, bei dem während des Bearbeitungsvorganges durch Zufuhr eines Kühlmittels zur Bearbeitungsstelle gekühlt wird. Als Kühlmittel wird über eine Düse ein Flüssigkeitsstrahl aus CO₂ auf das Werkstück verwendet. Dabei trifft der Flüssigkeitsstrahl aus CO₂ an der Bearbeitungsstelle auf das Werkstück, wobei ein Niederschlag von festem CO₂ entsteht. Dabei soll das flüssige CO₂ an der Stelle expandieren, wo das Werkzeug das Werkstück berührt.

Aus der DE-AS 1 037 808 ist die spanabhebende Bearbeitung unter Verwendung von Kohlensäure in Form von Schnee für Kühlzwecke bekannt. Dabei strömt flüssige Kohlensäure unter Druck aus einem Kapellarrohr oder einer Düse aus und wird beim Austritt aufgrund des Druckabfalles augenblicklich in ein Gemisch aus Dampf und Schnee umgewandelt.

Bei der auf Kohlendioxid beruhenden Kühlmethode handelt es sich um eine trockene Kühlung. Da das Kohlendioxid bei normaler Umgebungstemperatur den gasförmigen Zustand annimmt, verbleiben in Anschluss an die gekühlte Bearbeitung keinerlei Kühlmittelrückstände auf dem Werkstück.

In der DE 199 15 619 A1 ist ein Verfahren zum Abführen von Zerspanungsprodukten eines zerspanenden Bearbeitungsverfahrens beschrieben, bei dem feste CO₂-Teilchen einem Gasstrom zugeführt werden. Der Gasstrom mit den aufgenommenen festen CO₂-Teilchen wird dann einem Bearbeitungsraum zugeführt und hier auf einen Bereich gerichtet, in dem ein Werkstück von einem Werkzeug zerspanend bearbeitet wird, wobei zumindest ein Großteil der erzeugten Zerspanungsprodukte erfasst wird.

In dem Aufsatz "Kühlschmieren beim Zerspanen" von Kurt Häuser (Technische Rundschau Nr. 25, 19. Juni 1970, Seiten 21 u. 23; Technische Rundschau Nr. 26, 26. Juni 1970, Seiten 29 u. 31) wird dem Fachmann die Lehre vermittelt, CO₂ als Kühlschmiermittel einzusetzen, das mit hohem Druck (50 - 70 atü) als Flüssigkeitsstrahl an die Wirkstelle gespritzt werden soll, wo die Entspannung und damit die Expansion zu einem gasförmigen Kühlmittel erfolgt, so dass sich das Kühlschmiermittel an der Wirkstelle als Schnee niederschlägt.

In der US-A-3,971,114 wird allgemein auf Tieftemperatur-Kühlmittel, insbesondere Freon-12 als Beispiel für expandierbare Gas-Kühlmittel hingewiesen. Hier soll das durch ein Werkzeug hindurch geleitete Kühlmittel aus dem Werkzeug aus einer kleinen Öffnung bzw. Bohrung austreten, wobei diese Bohrung die Kühlmittelmenge steuern soll und in einem solchen Abstand von der tatsächlichen Bearbeitungsstelle liegt, dass Späne keinen störenden Einfluss auf den austretenden Kühlmittelstrom haben können.

Die FR 2 804 492 A1 beschreibt ein verfahren zur spanenden oder verformenden Bearbeitung von Werkstücken gemäß dem Oberbegriff des unabhängigen Anspruchs 1, bei dem zur Vermeidung der Verwendung von Öl als Schmiermittel flüssiges Kohlendioxid eingesetzt wird, das unter Druck stehend durch das Werkzeug hindurchgeleitet wird. In unmittelbarer Nähe der Bearbeitungsstelle wird das flüssige Kohlendioxid aus dem Werkzeug heraus expandiert.

Die DE 10 37 808 B beschreibt die Verwendung von Kohlensäure in Form von Schnee für Kühlzwecke, wobei Kohlensäureschnee auch als Suspension in einem Öl oder einer anderen Flüssigkeit befördert werden kann. Das Öl beschwert die feinen Kohlensäureschneeteilchen und weist Strömungseigenschaften auf, die reiner Kohlensäureschnee nicht hätte. Das Verdüsen von Kohlesäure und Öl geschieht dabei über zwei Düsen, die entweder getrennt voneinander angeordnet oder voneinander ummantelt sind. Ein Zusammenführen von Öl und Kohlensäure erfolgt somit erst im Zeitpunkt des Verdüsens.

Die GB 784,504 A1 beschreibt ein Werkzeug gemäß dem Oberbegriff des unabhängigen Anspruchs 12, bei dem flüssiges Kohlendioxid oder ein anderes Kühlmedium zur Werkzeugspitze durch eine Leitung hindurchgeführt wird, die in einer feinen Düsenbohrung endet. Die Bohrungen sind als Kapillardurchgänge in den Spitzen oder Schneidkanten der Werkzeuge ausgeführt.

Der Erfindung liegt die Aufgabe zugrunde, das eingangs beschriebene Verfahren hinsichtlich seiner Werkzeugkühlung zu verbessern und ein zur Durchführung des so verbesserten Verfahrens geeignetes Werkzeug zu entwickeln.

Ausgehend von dem eingangs beschriebenen Verfahren wird diese Aufgabe erfindungsgemäß dadurch gelöst, dass unter Druck stehendes flüssiges CO₂ intern durch das Werkzeug hindurch geleitet und in unmittelbarer Nähe der eigentlichen Bearbeitungsstelle in diese aus dem Werkzeug heraus durch Druckabfall auf Umgebungsdruck zu einem kaltes Gas und Schnee enthaltenden Kühlmittelstrom expandiert wird, wobei die Expansion durch eine den Kühlmittelaustritt aus dem Werkzeug bildende Expansionsdüse erfolgt und dem flüssigen CO₂ ein dünnflüssiges Schmiermittel zugefügt wird.

Hinsichtlich des Werkzeuges wird die erfindungsgemäße Aufgabe gelöst durch zumindest einen internen, für die Durchleitung des flüssigen CO₂ ausgelegten Kühlmittelkanal, der in der Nähe einer Werkzeugschneide oder einer Werkzeugführungsleiste in eine Expansionsdüse für die CO₂-Verdampfung mündet wobei die Austrittsöffnung der Expansionsdüse in einem geringen, ein Nachschleifen der Werkzeugschneide bzw. -führungsleiste ermöglichenden Abstand vor dem Werkzeugaustritt liegt.

Das Werkzeug können z.B. ein Bohrer, ein Gewindeformer, ein Fräser, eine Bohrstange, ein Reibwerkzeug, Wendeplatten für Drehmaschinen oder dgl. sein. Es kann sich um rotierende, stehende und insbesondere um eintauchende Werkzeuge mit geometrisch bestimmter und/oder unbestimmter Schneide handeln. Die Werkzeuge können spanabhebend oder aber materialverformend arbeiten z.B. als Gewindeformer, wo mittels Fließpressen Material verformt wird. Bei den schneidenden Werkzeugen kann es sich um Ein-, Zwei- oder Mehrschneidenwerkzeuge handeln. Dabei soll unter "Werkzeug" auch z.B. eine beim Trockenräumen (Innenräumen) eingesetzte Ringdüse verstanden werden, die während des Prozesses das Räumwerkzeug von außen benetzt bzw. mit CO₂ beaufschlagt.

Bei rotierenden, eintauchenden oder sonstigen Werkzeugen wird erfindungsgemäß eine Spindel und/oder ein Werkzeughalter mit interner Hindurchleitung des flüssigen CO₂ und verlustloser Ankopplung an das Werkzeug verwendet. Das flüssige CO₂ wird dann über eine Verbindungsleitung z.B. durch eine rotierende Spindel eines Bearbeitungszentrums hindurch verlustlos bis zum Werkzeug geführt. Erst am Austritt in Schneidennähe wird über eine Düse mit engstem Querschnitt die Expansion in dem Bearbeitungsbereich realisiert. Das zur Kühlung verwendete CO₂ wird z.B. mit handelsüblichen Gasflaschen zur Verfügung gestellt und liegt somit mit einer Temperatur von etwa 20°C und einem Druck von etwa 57 bar vor. Die Spindel bzw. der Werkzeughalter ist also von der Expansionskälte nicht betroffen.

Als Werkzeughalter kommen Schrumpffutter, Hydrodehnspannfutter oder Spannzangenfutter für alle Bohrer, Aufbohrwerkzeug- oder Gewindewerkzeugschäfte oder für Werkzeugkörper, z.B. Monoblockwerkzeuge (Reibahlen, Bohrstangen) sowie Werkzeughalter für Drehoperationen und Räumwerkzeuge in Frage.

Das erfindungsgemäße Verfahren eignet sich insbesondere bei eintauchenden Werkzeugen, bei denen sich die eingangs beschriebenen Verfahren gar nicht oder nur mit verringertem Kühlwirkungsgrad einsetzen lassen. Durch die erfindungsgemäße Kühlmittelzufuhr unmittelbar an der Wirkstelle ergibt sich hier eine deutliche Absenkung der Zerspanungs- bzw. Verformungstemperatur. Die thermischen Einflüsse sind kontrollierbar, was sich positiv auswirkt auf die Werkzeugstandzeit, die Schnittparameter sowie die Werkstückqualität, insbesondere hinsichtlich Maßhaltigkeit und Oberflächengüte.

Es ist zweckmäßig, wenn die Ansteuerung für den Kühlmittelfluss nur während der Wirkzeit mittels eines CO₂-beständigen Magnetventils erfolgt. Dabei ist es vorteilhaft, wenn die Dimensionierung der Expansionsdüse und/oder des ihr zugeordneten Kühlmittelkanals so vorgenommen wird, dass pro Zeiteinheit nur die für eine ausreichende Kühlung erforderliche Menge an flüssigem CO₂ expandiert wird.

Durch den Einsatz der Erfindung lassen sich die bisher bei der sogenannten Trockenbearbeitung auftretenden Probleme (Verunreinigungen der Maschine; thermische Probleme, insbesondere dort wo es auf Stichmaßtoleranzen ankommt) beheben. Durch Versuche konnte nachgewiesen werden, dass bei Einsatz des erfindungsgemäßen Verfahrens Werkzeug und Werkstück in der Temperatur konstant gehalten werden können. Bei Einsatz der erfindungsgemäßen Kühlung lassen sich also Produktionsstraßen komplett trockenlegen und zwar auch dort, wo es auf große Fertigungsgenauigkeit ankommt.

Nachdem durch umfangreiche und intensive Versuche festgestellt werden konnte, dass bei besonders hohen Zerspanungsgeschwindigkeiten und Vorschüben, insbesondere bei der Bearbeitung von Si-haltigen Aluminiumlegierungen nicht auf eine Restschmierung verzichtet werden kann, wird erfindungsgemäß vorgeschlagen, in derartigen Fällen dem flüssigen CO₂ das dünnflüssige Schmiermittel, z.B. ein niedrig viskoses Öl, zuzufügen, wobei die Impfung mit dem Schmiermittel unmittelbar vor Einleitung des flüssigen CO₂-Stroms in das Werkzeug in Form einer kontinuierlichen Einspeisung vorgenommen werden kann. Zweckmäßig ist dann eine intensive Vermischung, die erfindungsgemäß dadurch sichergestellt werden kann, dass das CO₂/Schmiermittel-Gemisch durch ein Sinterplättchen hindurch geleitet wird.

Der flüssige, dem Werkzeug zugeführte CO₂-Strom kann einen Druck von etwa 55 - 63 bar bzw. eine Temperatur von etwa 18 - 25°C aufweisen. Das Mischungsverhältnis flüssiges CO₂: flüssigem Schmiermittel kann z.B. auf etwa 30:1 eingestellt werden.

Es kann ferner zweckmäßig sein, wenn die CO₂-Expansionsdüse in eine Druckluftdüse integriert ist, in dessen sich beim Betrieb bildenden Druckluftmantel eine Schmiermittel-Zufuhr ausmündet. Dem sich bildenden, den CO₂-Expansionsstrahl ummantelnde Druckluftmantel wird dann das Schmiermittel beigefügt, wobei dann die Schmiermittelmenge unabhängig vom Kühlbedarf durch das CO₂ gesteuert werden könnte. Eine derartige Lösung eignet sich allerdings nur für größere Werkzeuge.

Soweit es die Art der Werkzeugherstellung erlaubt, ist es zweckmäßig, wenn die Expansionsdüse bei der Werkzeugherstellung in das Werkzeug eingearbeitet, z.B. eingesintert ist. Soweit das Werkzeug selbst zerspanend hergestellt wird, was z.B. bei Bohrstangen der Fall ist, kann die Expansionsdüse von außen eingebaut oder aber selbst spanabhebend hergestellt oder aber durch Erodieren in das Werkzeug eingebracht werden.

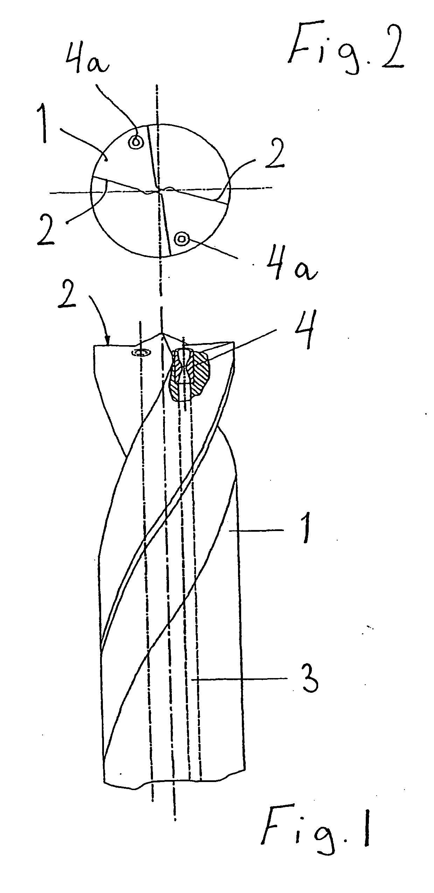

In der Zeichnung ist eine als Beispiel dienende Ausführungsform der Erfindung schematisch dargestellt. Es zeigen
- **Figur 1**: einen Spiralbohrer in Seitenansicht, ausschnittsweise im Längsschnitt,
- **Figur 2**: den Spiralbohrer gemäß Figur 1 in Draufsicht und
- **Figur 3**: einen Strömungsplan für die CO₂-Schmiermittel- impfung.

Dargestellt ist ein Werkzeug 1 in Form eines Spiralbohrers mit zwei Werkzeugschneiden 2. Durch das Werkzeug 1 sind zwei für die Durchleitung von flüssigem CO₂ ausgelegte Kühlmittelkanäle 3 hindurch geführt, die in der Nähe der ihnen zugeordneten Werkzeugschneide 2 jeweils in eine Expansionsdüse 4 für die CO₂-Verdampfung münden. Die Austrittsöffnung 4a jeder Expansionsdüse 4 liegt in einem geringen, ein Nachschleifen der Werkzeugschneide 2 ermöglichenden Abstand vor dem Werkzeugaustritt des verdampften CO₂.

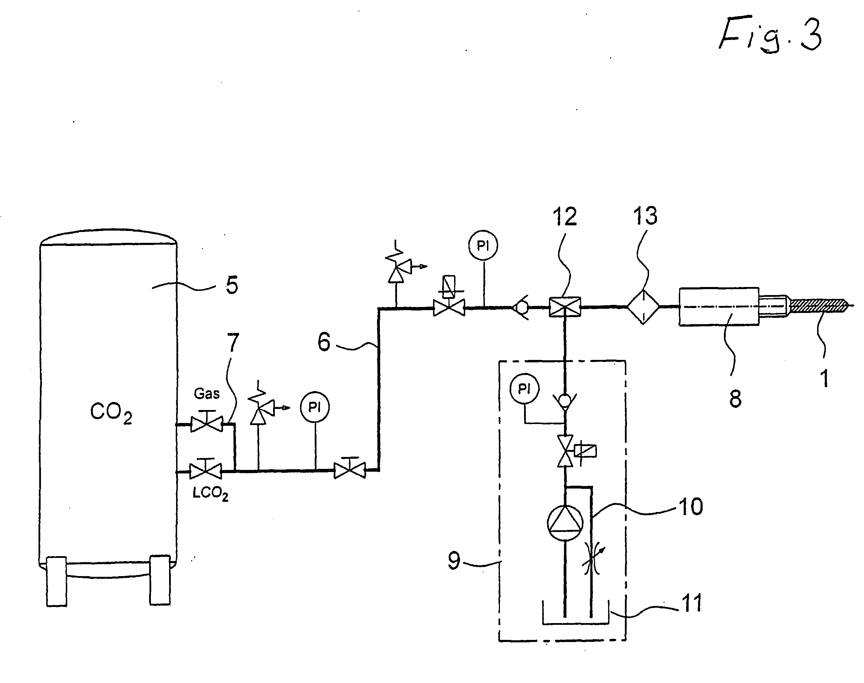

Figur 3 zeigt ein Ausführungsbeispiel für die Einspeisung eines flüssigen Schmiermittels in den CO₂-Strom vor Eintritt in das Werkzeug.

Aus einem CO₂-Behälter 5 wird das flüssige CO₂, das beispielsweise eine Temperatur von 20°C und einen Druck von 57 bar aufweisen kann, über eine CO₂-Leitung 6, an die noch eine Gasleitung 7 angeschlossen ist, über eine Drehdurchführung 8 in ein Werkzeug 1 eingeleitet. Strichpunktiert ist schematisch eine Anlage 9 zur Impfung dieses CO₂-Stromes mit einem flüssigen Schmiermittel dargestellt. Diese Anlage umfasst eine mit Bypass ausgestattete Hydraulikpumpe 10, die aus einem Schmiermittelbehälter 11 Schmiermittel mit einem Druck, der zumindest dem CO₂-Druck in der CO₂-Leitung 6 entspricht, über ein Nadelventil 12 in die CO₂-Leitung 6 einspeist. In Strömungsrichtung hinter diesem Nadelventil 12 ist in die CO₂-Leitung 6 ein Sinterplättchen 13 eingeschaltet, das von dem CO₂/Schmiermittel-Gemisch durchströmt wird und eine intensive Vermischung der beiden Gemischkomponenten sicherstellt.

## Patentansprüche

1. Verfahren zur spanenden oder verformenden Bearbeitung von metallischen oder keramischen Werkstücken und der Verwendung eines vorzugsweise eintauchenden Werkzeuges (1), wobei während des Bearbeitungsvorganges ein zumindest überwiegend aus Kohlendioxid (CO₂) bestehendes Kühlmittel der Bearbeitungsstelle zugeführt wird, wobei unter Druck stehendes flüssiges CO₂ intern durch das Werkzeug (1) hindurch geleitet und in unmittelbarer Nähe der eigentlichen Bearbeitungsstelle in diese aus dem Werkzeug (1) heraus expandiert wird, **dadurch gekennzeichnet, dass** unter Druck stehendes, flüssiges CO₂ aus dem Werkzeug (1) heraus durch Druckabfall auf Umgebungsdruck zu einem kaltes Gas und Schnee enthaltenen Kühlmittelstrom expandiert wird, wobei die Expansion durch eine den Kühlmittelaustritt aus dem Werkzeug bildende Expansionsdüse (4) erfolgt und dem flüssigen CO₂ ein dünnflüssiges Schmiermittel zugefügt wird.

2. Verfahren nach Anspruch 1, **gekennzeichnet durch** die Verwendung einer Spindel und/oder eines Werkzeughalters mit interner Hindurchleitung des flüssigen CO₂ und verlustloser Ankopplung an das Werkzeug (1).

3. Verfahren nach Anspruch 1 oder 2, **dadurch gekennzeichnet, dass** die Ansteuerung für den Kühlmittelfluss nur während der Wirkzeit mittels eines CO₂-beständigen Magnetventils erfolgt.

4. Verfahren nach Anspruch 1, 2 oder 3, **dadurch gekennzeichnet; dass** die Dimensionierung der Expansionsdüse (4) und/oder des ihr zugeordneten Kühlmittelkanals (3) so vorgenommen wird, dass pro Zeiteinheit nur die für eine ausreichende Kühlung erforderliche Menge an flüssigem CO₂ expandiert wird.

5. Verfahren nach Anspruch 1, **dadurch gekennzeichnet, dass** als Schmiermittel ein niedrig viskoses Öl verwendet wird.

6. Verfahren nach Anspruch 1, **dadurch gekennzeichnet, dass** das Schmiermittel dem flüssigen CO2-Strom vor dessen Einleitung in das Werkzeug (1) kontinuierlich zugefügt wird.

7. Verfahren nach Anspruch 1, **dadurch gekennzeichnet, dass** das Schmiermittel über ein Nadelventil (11) mit einem zumindest dem CO2-Druck entsprechenden Druck in das flüssige CO2 eingespeist wird.

8. Verfahren nach Anspruch 1, **dadurch gekennzeichnet, dass** nach dem Einspeisen des Schmiermittels in das flüssige CO2 das CO2/Schmiermittel-Gemisch einer intensiven Vermischung unterworfen wird.

9. Verfahren nach Anspruch 8, **dadurch gekennzeichnet, dass** das CO2/Schmiermittel-Gemisch zu seiner intensiven Vermischung durch ein Sinterplättchen (13) hindurch geleitet wird.

10. Verfahren nach einem der vorhergehenden Ansprüche, **dadurch gekennzeichnet, dass** der flüssige, dem Werkzeug (1) zugeführte CO2-Strom einen Druck von etwa 55 - 63 bar bzw. eine Temperatur von etwa 18°C - 25°C aufweist.

11. Verfahren nach Anspruch 1, **dadurch gekennzeichnet, dass** das Mischungsverhältnis flüssiges CO2:flüssiges Schmiermittel auf etwa 30:1 eingestellt wird.

12. Werkzeug zur Durchführung des Verfahrens nach einem der vorhergehenden Ansprüche mit zumindest einem internen, für die Durchleitung des flüssigen CO₂ ausgelegten Kühlmittelkanal (3), der in der Nähe einer Werkzeugschneide (2) oder einer Werkzeugführungsleiste in eine Expansionsdüse (4) für die CO₂-Verdampfung mündet, **dadurch gekennzeichnet, dass** die Austrittsöffnung (4a) der Expansionsdüse (4) in einem geringen, ein Nachschleifen der Werkzeugschneide (2) bzw. -führungsleiste ermöglichenden Abstand vor dem Werkzeugaustritt liegt.

13. Werkzeug nach Anspruch 12, **dadurch gekennzeichnet, dass** die Expansionsdüse (4) bei der Werkzeugherstellung in das Werkzeug (1) eingearbeitet, z.B. eingesintert ist.

14. Werkzeug nach Anspruch 12 oder 13, **dadurch gekennzeichnet, dass** die CO₂-Expansionsdüse (4) in eine Druckluftdüse integriert ist, in dessen sich beim Betrieb bildenden Druckluftmantel eine Schmiermittel-Zufuhr ausmündet.

## Claims

1. A method for the cutting or shaping machining of metallic or ceramic workpieces using a preferably submerged tool (1), in which, during the machining operation, a coolant which at least predominantly comprises carbon dioxide (CO₂) is fed to the machining location, wherein pressurized liquid CO₂ is passed internally through the tool (1) and, in the immediate vicinity of the actual machining location, is expanded out of the tool (1) into the machining location **characterized in that** pressurized liquid CO₂ is expanded out of the tool (1) so as to form a coolant flow which contains which contains cold gas and snow as a result of a pressure drop to ambient pressure, the expansion being effected through an expansion nozzle (4) which forms the coolant outlet from the tool wherein a low-viscosity lubricant is added to the liquid CO₂.

2. The method as claimed in claim 1, **characterized by** the use of a spindle and/or a tool holder with an internal passage for the liquid CO₂ and loss-free coupling to the tool (1).

3. The method as claimed in claim 1 or 2, **characterized in that** the coolant flow is only actuated by means of a CO₂-resistant solenoid valve during the working time.

4. The method as claimed in claim 1, 2 or 3, **characterized in that** the expansion nozzle (4) and/or its associated coolant channel (3) is/are dimensioned in such a way that only the quantity of liquid CO₂ which is required for sufficient cooling per unit time is expanded.

5. The method as claimed in claim 1, **characterized in that** the lubricant used is a low-viscosity oil.

6. The method as claimed in claim 1 **characterized in that** the lubricant is added to the liquid CO₂ stream continuously before the latter is introduced into the tool (1).

7. The method as claimed in claim 1, **characterized in that** the lubricant is fed into the liquid CO₂ via a needle valve (11) at a pressure which at least corresponds to the CO₂ pressure.

8. The method as claimed in claim 1, **characterized in that** after the lubricant has been fed into the liquid CO₂, the CO₂/lubricant mixture is subjected to intensive mixing.

9. The method as claimed in claim 8, **characterized in that** the CO₂/lubricant mixture is passed through a small sintered plate (13) in order for it to be intensively mixed.

10. The method as claimed in one of the preceding claims, **characterized in that** the liquid CO₂ stream fed to the tool (1) is at a pressure of approximately 55-63 bar and a temperature of approximately 18°C - 25°C.

11. The method as claimed in claim 1, **characterized in that** the mixing ratio of liquid CO₂ to liquid lubricant is set to approximately 30:1.

12. The tool for carrying out the method as claimed in one of the preceding claims, having at least one internal coolant channel (3) which is designed for the liquid CO₂ to pass through and, in the vicinity of a tool cutting edge (2) or a tool-guide strip, opens out into an expansion nozzle (4) to evaporate to the CO₂, **characterized in that** the outlet opening (4a) of the expansion nozzle (4) lies at a short distance ahead of the tool outlet, allowing the tool cutting edge (2) or tool-guide strip to be reground or sharpened.

13. The tool as claimed in claim 12, **characterized in that** the expansion nozzle (4) is worked, for example sintered, into the tool (1) during production of the tool.

14. The tool as claimed in one of claims 12 or 13, **characterized in that** the CO₂ expansion nozzle (4) is integrated in a compressed-air nozzle, which has a lubricant feed opening out into its compressed-air jacket which forms during operation.

## Revendications

1. Procédé d'usinage de pièces métalliques ou céramiques par enlèvement de copeaux ou par déformation, et d'utilisation d'un outil (1) de préférence plongeant, un réfrigérant consistant au moins majoritairement en du dioxyde de carbone (CO₂) étant apporté au poste d'usinage durant le processus d'usinage, du CO₂ liquide sous pression étant dirigé en interne au travers de l'outil (1) et étant expansé à sa sortie de l'outil à proximité immédiate du poste d'usinage proprement dit, **caractérisé en ce que** l'on met en expansion le CO₂ liquide sous pression sortant de l'outil (1), par baisse de pression jusqu'à la pression environnante, pour former un flux réfrigérant contenant du gaz et de la neige, l'expansion s'effectuant au travers d'une buse d'expansion (4) formant la sortie de réfrigérant hors de l'outil, et un lubrifiant très liquide étant ajouté au CO₂ liquide.

2. Procédé selon la revendication 1, **caractérisé par** l'utilisation d'une broche et/ou d'un porte-outil avec canalisation traversante interne du CO₂ liquide et couplage sans perte à l'outil (1).

3. Procédé selon la revendication 1 ou 2, **caractérisé en ce que** le pilotage relatif au flux réfrigérant n'est effectué que durant le temps machine disponible au moyen d'une électrovalve résistante au CO₂.

4. Procédé selon la revendication 1, 2 ou 3, **caractérisé en ce que** l'on prévoit le dimensionnement de la buse d'expansion (4) et/ou du canal de réfrigération (3) qui lui est associé, de façon que par unité de temps, l'on mette en expansion seulement la quantité de CO₂ liquide requise pour une réfrigération suffisante.

5. Procédé selon la revendication 1, **caractérisé en ce que** l'on utilise une huile de faible viscosité en tant que lubrifiant.

6. Procédé selon la revendication 1, **caractérisé en ce que** l'on ajoute continûment le lubrifiant au flux de CO₂ liquide avant son introduction dans l'outil (1).

7. Procédé selon la revendication 1, **caractérisé en ce que** l'on intègre le lubrifiant dans le CO₂ liquide par l'intermédiaire d'une vanne à pointeau (11) à une pression correspondant au moins à la pression de CO₂.

8. Procédé selon la revendication 1, **caractérisé en ce que** l'on soumet le mélange CO₂/lubrifiant à un mélange intensif après l'intégration du lubrifiant dans le CO₂ liquide.

9. Procédé selon la revendication 8, **caractérisé en ce que** l'on fait passer le mélange CO₂/lubrifiant au travers d'une plaquette frittée (13) en vue de son mélange intensif.

10. Procédé selon l'une des revendications précédentes, **caractérisé en ce que** le flux de CO₂ liquide apporté à l'outil (1) présente une pression d'environ 55-63 bar ou une température d'environ 18°C-25°C.

11. Procédé selon la revendication 1, **caractérisé en ce que** l'on ajuste le rapport du mélange CO₂ liquide : lubrifiant liquide, à environ 30 : 1.

12. Outil pour la mise en oeuvre du procédé selon l'une des revendications précédentes, comprenant au moins un canal de réfrigération (3) interne prévu pour l'acheminement du CO₂ liquide, canal qui débouche à proximité d'un tranchant d'outil (2) ou d'une bordure de guidage d'outil, dans une buse d'expansion (4) pour la vaporisation du CO₂, **caractérisé en ce que** l'ouverture de sortie (4a) de la buse d'expansion (4) se trouve devant la sortie de l'outil à une distance réduite permettant un raffûtage du tranchant d'outil (2) ou de la bordure de guidage d'outil.

13. Outil selon la revendication 12, **caractérisé en ce que** la buse d'expansion (4) est usinée dans l'outil (1) lors de la fabrication de l'outil, par exemple formée dans l'outil lors d'un frittage.

14. Outil selon la revendication 12 ou 13, **caractérisé en ce que** la buse d'expansion de CO₂ (4) est intégrée dans une buse à air comprimé, une arrivée de lubrifiant débouchant dans la gaine d'air comprimé se formant en fonctionnement par cette buse.
